# FASCICULE DE BREVET EUROPEEN

(11) **EP 3 019 777 B1**
(45) Date de publication et mention de la délivrance du brevet: **13.09.2017**
(21) Numéro de dépôt: 14736894.8
(22) Date de dépôt: 12.06.2014
(51) Int. Cl.: F16H 59/70, F16H 59/68

(54) **PROCÉDÉ ET DISPOSITIF DE RECONNAISSANCE D'UN RAPPORT DE VITESSES ENGAGÉ**
VERFAHREN UND VORRICHTUNG ZUR ERKENNUNG DES VERHÄLTNISSES EINES EINGELEGTEN GETRIEBEGANGES
METHOD AND DEVICE FOR RECOGNISING AN ENGAGED GEAR RATIO

(30) Priorité: 10.07.2013 FR 1356765
(43) Date de publication de la demande: 18.05.2016
(73) Titulaire: PSA Automobiles SA, 78300 Poissy (FR)
(72) Inventeur: CHARLES, Juliette, F-78510 Triel sur Seine (FR); THOMAS, Mathieu, F-78220 Viroflay (FR)
(86) Numéro de dépôt international: PCT/FR2014/051426
(87) Numéro de publication internationale: WO 2015/004350

(56) Documents cités:
- EP-A1- 0 654 622
- EP-A2- 1 950 461
- DE-A1- 10 207 940
- DE-A1- 19 630 937
- FR-A1- 2 907 746

## Description

L'invention se situe dans le domaine du contrôle de commande d'un véhicule automobile. Plus particulièrement, elle concerne des procédés et dispositifs pour la reconnaissance d'un rapport de vitesses d'une boîte de vitesses manuelle d'un véhicule automobile équipé d'un moteur thermique, tels que connus de DE 196 30 937, divulguant toutes les caractéristiques du préambule de la revendication 1. Sur un véhicule automobile équipé d'un groupe motopropulseur, GMP, thermique avec une boîte de vitesses de type manuelle ainsi que d'un capteur d'embrayage binaire tout-ou-rien placé sur la pédale d'embrayage, il est connu d'utiliser un système de pilotage des organes. Le but d'un tel système est d'adapter de manière automatique le type de fonctionnement de chacun des organes du véhicule, afin de répondre à la volonté du conducteur. La volonté du conducteur est de manière connue exprimée par un degré d'enfoncement de la pédale d'accélérateur du véhicule.

Afin de respecter la volonté du conducteur, le contrôle moteur utilise de manière connue le rapport de boîte de vitesses engagé dans le calcul du couple effectif, des filtrages agrément de conduite, du régulateur d'anti-rebond et du régulateur de ralenti par exemple.

Il est connu d'estimer le rapport de vitesses engagé d'une boîte de vitesses à base de la vitesse du véhicule et du régime du moteur thermique. L'obtention de l'estimation consiste en la multiplication de la vitesse instantanée du véhicule par le facteur mille et en la division du résultat par le régime courant du moteur thermique. La comparaison de ce résultat final à des plages de valeurs prédéfinies et dépendantes du moteur thermique ainsi que de la boîte de vitesses, permet d'estimer le rapport de vitesse engagé. A titre d'exemple, la plage de valeurs entre 4 et 7 peut correspondre au premier rapport de vitesses, tandis que la plage de valeurs entre 10 et 13 peut correspondre au deuxième rapport. Si le résultat final ne correspond à aucune des plages de valeurs prédéfinies, le rapport estimé est nul.

Le rapport estimé est reconnu comme rapport engagé de la boîte de vitesses si l'information ainsi obtenue est cohérente avec d'autres signaux. Par exemple, un changement de rapport va de pair avec un débrayage et un embrayage.

Il est connu d'utiliser une stratégie de reconnaissance du rapport de vitesses engagé d'une boîte de vitesses, qui reconnait le rapport nul (correspondant au point mort) dès que le conducteur appuie sur la pédale d'embrayage (correspondant à un débrayage), car la chaine de traction est alors estimée ouverte, ce qui entraîne la perte du rapport estimé. Ainsi, lors d'un passage de rapport, il est nécessaire d'établir une nouvelle estimation du rapport de vitesses engagé après le débrayage, pour l'appliquer suite à un embrayage.

Cependant, lors d'un passage de vitesses rapide, ou sur un véhicule où le capteur embrayage est positionné très bas, l'information qui indique un embrayage arrive avant qu'une nouvelle estimation du rapport de vitesses ne soit disponible. Dans ce cas, le rapport nul est reconnu après l'embrayage, ce qui correspond à une reconnaissance erronée. Les organes du véhicule, comme par exemple le régulateur de ralenti utilisent l'information erronée. Par exemple, dans ce cas, le régulateur de ralenti utilise le paramétrage du régulateur à vide, qui est beaucoup plus fort que dans le cas d'une chaine de traction fermée. Ceci provoque des oscillations fortes dans le véhicule en ralenti entrainé. Des tests de roulage ont permis de mesurer des oscillations sur le régime moteur de l'ordre de 130 tours/min en premier rapport et 250 tours/min en deuxième. Pour sortir de cette stratégie, dans des systèmes connus il est nécessaire d'attendre l'écoulement d'un compteur de confirmation correspondant à cette situation, ou d'avoir une action sur la pédale d'embrayage de la part du conducteur. De telles oscillations sont inacceptables.

L'invention a pour objectif de proposer un procédé de reconnaissance d'un rapport de vitesses qui vise à pallier au moins un des désavantages présents dans l'état de la technique. En particulier, l'invention propose un tel procédé qui prend en compte la situation de vie dans laquelle l'information d'embrayage arrive plus rapidement que l'information du rapport estimé. L'invention concerne également un dispositif mettant en oeuvre le procédé, ainsi qu'un véhicule équipé d'un tel dispositif.

L'invention a pour objet un procédé de reconnaissance d'un rapport de vitesses R engagé de la boîte de vitesses manuelle d'un véhicule automobile équipé d'un moteur thermique et d'un capteur d'embrayage binaire. Le procédé comprend les étapes suivantes :
- mise à disposition d'un signal binaire indicatif de l'état embrayé/débrayé de l'embrayage du véhicule ;
- mise à disposition d'un signal indicatif d'une estimation du rapport engagé de la boîte de vitesses ;
- reconnaissance d'un rapport de vitesses, R, à base de paramètres comprenant une estimation du rapport engagé de la boîte de vitesses et une information d'embrayage confirmée.

Le procédé est remarquable en ce qu'une information d'embrayage est considérée comme confirmée lorsque,
- l'état débrayé est indiqué par le signal binaire, ou
- suite à la détection d'une transition du signal de l'état débrayé à l'état embrayé,
   ∘ l'état embrayé persiste après l'écoulement d'une période de temporisation d'une durée Tₘₐₓ, ou
   ∘ le signal d'estimation indique un rapport engagé non-nul avant l'écoulement d'une période de temporisation d'une durée Tₘₐₓ.

De préférence, le rapport de vitesses nul peut être reconnu lorsque l'information d'embrayage confirmée correspond à l'état débrayé.

Le rapport de vitesses indiqué par le signal d'estimation peut être reconnu lorsque l'information d'embrayage confirmée correspond à l'état embrayé.

De préférence, le signal indicatif d'une estimation du rapport engagé de la boîte de vitesses peut être calculé par des moyens d'estimation à base de paramètres comprenant le régime moteur et/ou la vitesse du véhicule.

La durée Tₘₐₓ de la période de temporisation peut de préférence être supérieure au temps nécessaire à la mise à disposition d'une estimation du rapport engagé de la boîte de vitesses. Avantageusement, la durée est supérieure au temps nécessaire à la mise à disposition d'une estimation du rapport engagé suite à la détection de l'état débrayé de l'embrayage. La durée peut avantageusement être supérieure ou égale à 100 ms. De préférence, elle peut être égale à 100 ms.

L'invention a également pour objet un procédé d'interprétation de la volonté conducteur exprimée par un taux d'appui sur la pédale d'accélérateur d'un véhicule automobile équipé d'une boîte de vitesses manuelle, d'un moteur thermique et d'un capteur d'embrayage binaire. Le procédé prend en compte un rapport de vitesses engagé reconnu, R. Le procédé est remarquable en ce que le rapport de vitesses engagé est reconnu par le procédé décrit selon l'invention.

L'invention a également pour objet un dispositif pour la mise en oeuvre du procédé selon l'invention. Le dispositif comprend des moyens d'obtention d'un signal binaire indicatif de l'état embrayé/débrayé d'un véhicule automobile, des moyens d'obtention de paramètres comprenant le régime moteur du véhicule, un élément mémoire et des moyens de calculs ou moyens processeurs. Le dispositif est remarquable en ce que les moyens de calculs sont configurés de façon à
- calculer une estimation d'un rapport de vitesses engagé en utilisant les paramètres comprenant le régime moteur du véhicule ;
- reconnaitre un rapport de vitesses, R, à base d'une estimation du rapport d'engagé et d'une information d'embrayage confirmée, l'information d'embrayage étant confirmée par les moyens de calculs lorsque, suite à la détection d'une transition du signal binaire de l'état débrayé à l'état embrayé,
   ∘ l'état embrayé persiste après l'écoulement d'une période de temporisation d'une durée Tₘₐₓ, ou
   ∘ l'estimation d'un rapport engagé indique un rapport non-nul avant l'écoulement d'une période de temporisation d'une durée Tₘₐₓ.

L'invention a également pour objet un programme d'ordinateur comprenant des instructions lisibles et exécutables par un ordinateur, caractérisé en ce que les instructions amènent un ordinateur qui les exécute à mettre en oeuvre le procédé selon l'invention. L'invention a également pour objet un produit logiciel comprenant un moyen de stockage lisible par un ordinateur, sur lequel le programme d'ordinateur selon l'invention est enregistré.

Finalement, l'invention a également pour objet un véhicule automobile équipé d'une boîte de vitesses manuelle, d'un moteur thermique et d'un capteur d'embrayage binaire. Le véhicule est remarquable en ce qu'il est équipé d'un dispositif selon l'invention, mettant en oeuvre le procédé selon l'invention.

Le procédé selon l'invention permet de synchroniser le signal binaire d'embrayage avec le signal de rapport estimé. Ainsi, comme l'information de l'embrayage n'est prise en compte qu'une fois que le rapport de vitesse courant a été estimé, le rapport reconnu sera non-nul, si un rapport de vitesses est réellement engagé. Le procédé permet donc une reconnaissance de rapport de vitesses engagé plus fiable et moins propice aux erreurs comparé à des procédés connus dans l'art. L'utilisation du rapport de vitesses correctement reconnu à l'aide du procédé selon l'invention permet d'augmenter l'agrément de conduite du véhicule automobile, ainsi que la sécurité de ses passagers. En effet, le rapport de vitesses reconnu R intervient dans les lois de commandes des organes du véhicule, et notamment dans la stratégie d'interprétation de la volonté du conducteur. Cette stratégie a pour but de traduire un degré d'enfoncement de la pédale d'accélérateur du véhicule en un jeu de paramètres qui contrôlent le fonctionnement de multiples organes du véhicule, dont le moteur. En évitant des erreurs au niveau de la reconnaissance du rapport de vitesses engagé, toute la chaîne de contrôle des organes du véhicule devient plus robuste. Comme le procédé se base sur des informations déjà disponibles dans les calculateurs d'un véhicule automobile, il peut être implémenté sans coût supplémentaire majeur, tout en améliorant les prestations du véhicule de manière importante.

D'autres caractéristiques et avantages de la présente invention seront mieux compris à l'aide de la description et des dessins parmi lesquels :
- la figure 1 est un graphe d'états montrant la fonctionnalité du procédé et du dispositif selon l'invention ;
- la figure 2 est une illustration schématique des étapes principales d'un mode de réalisation préférentiel du procédé selon l'invention ;
- la figure 3 montre l'évolution temporelle de plusieurs signaux qui interviennent dans un mode de réalisation préférentiel du procédé selon l'invention ;
- la figure 4 montre l'évolution temporelle de plusieurs signaux qui interviennent dans un mode de réalisation préférentiel du procédé selon l'invention ;
- la figure 5 montre l'évolution temporelle de plusieurs signaux qui interviennent dans un mode de réalisation préférentiel du procédé selon l'invention ;
- la figure 6 montre l'évolution temporelle de plusieurs signaux qui interviennent dans un mode de réalisation préférentiel du procédé selon l'invention ;
- la figure 7 est une illustration schématique d'un mode de réalisation préférentiel du dispositif selon l'invention.

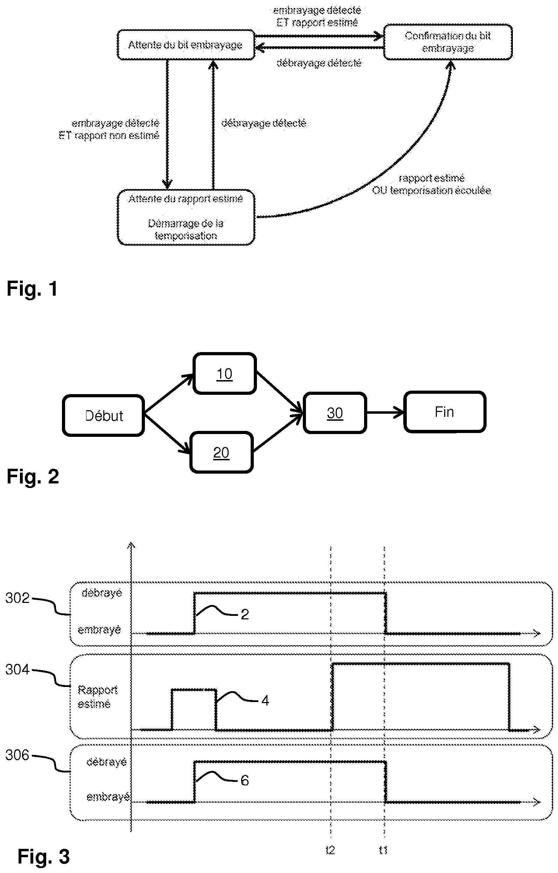

L'invention consiste à synchroniser le signal d'embrayage obtenu par un capteur binaire positionné sur la pédale d'embrayage d'un véhicule, avec le signal de rapport estimé, qui est calculé à partir de paramètres de roulage du véhicule, comme notamment le régime moteur et la vitesse du véhicule. Le graphe d'états de la figure 1 indique le fonctionnement du procédé et du dispositif selon l'invention.

Le signal obtenu par le capteur binaire est un signal indiquant soit l'état embrayé, soit l'état débrayé de la pédale. Un léger enfoncement de la pédale implique un passage à l'état débrayé. Dans le cadre de cette description, la notion « observation du bit embrayage » est synonyme de la détection d'un passage de l'état débrayé à l'état embrayé dans le signal obtenu par le capteur d'embrayage. L'information conférée par le bit embrayage n'est confirmée qu'après l'écoulement d'un délai de temporisation, ou si entretemps une nouvelle estimation du rapport de vitesses devient disponible. Conceptuellement, le signal binaire correspondant à l'état d'embrayage confirmé est une version filtrée et lissée du signal binaire obtenu par le capteur d'embrayage.

Un premier état correspond à l'attente de la détection du bit embrayage. Une transition d'état est déclenchée par l'observation du bit embrayage. Si en même temps une estimation du rapport de vitesses engagé non nulle est disponible, le bit embrayage est confirmé. Si par contre, l'estimation du rapport de vitesses indique le rapport nul, l'état transite dans une phase d'attente du rapport estimé. Cet état est maintenu jusqu'à ce qu'une estimation du rapport de vitesses non nulle devienne disponible, ce qui engendre la confirmation du bit embrayage. Si aucune nouvelle estimation du rapport de vitesses n'intervient avant l'écoulement du délai de temporisation, le bit embrayage est également confirmé. L'intervention d'un nouveau débrayage engendre une transition immédiate d'un quelconque état vers l'état d'attente initial.

Cette stratégie permet d'identifier la situation lors de laquelle l'information embrayage arrive avant l'information du rapport estimé. Lorsque cette situation intervient, on définit une fenêtre de temps d'une durée maximale Tₘₐₓ paramétrable, et ayant de préférence une durée supérieure ou égale à 100ms. Pendant cette période, le bit embrayage est temporisé si le rapport estimé reste nul. Pendant cette période, le signal de rapport estimé est scruté et l'information d'embrayage confirmée est maintenue à l'état débrayé. Lorsqu'un rapport non nul est estimé, ou qu'on atteint la fin de la fenêtre de temporisation Tₘₐₓ, l'état embrayé est confirmé. Si pendant le temps imparti Tₘₐₓ le rapport n'est pas encore estimé, et qu'un nouveau débrayage intervient, alors on repasse dans l'attente d'identification de la situation incriminée. La durée de la fenêtre de temporisation peut être adaptée en fonction du procédé d'estimation de rapport utilisé.

Comme l'information concernant un nouvel embrayage n'est prise en compte qu'une fois une nouvelle estimation du rapport de vitesses engagé est disponible, le rapport reconnu résultant sera non nul si un rapport non-nul est réellement engagé. Cette stratégie élimine une source d'erreurs présente dans les techniques connues dans l'art.

La figure 2 montre les étapes principales d'une réalisation préférentielle d'un procédé selon l'invention, qui implémente la fonctionnalité décrite.

Lors d'une première étape 10, un signal binaire indicatif de l'état embrayé/débrayé de l'embrayage du véhicule est mis à disposition. Des moyens d'obtention de ce signal, tels que des capteurs d'embrayage binaires, sont largement connus dans l'art et ne seront pas décrits plus de détails dans cette description.

En parallèle, lors de l'étape 20, un signal indicatif d'une estimation du rapport engagé de la boîte de vitesses est mis à disposition. Des procédés connus en soi sont utilisés pour calculer l'estimation du rapport, par exemple en utilisant le régime moteur et la vitesse du véhicule, selon la méthode précitée.

Lors de l'étape 30, la reconnaissance d'un rapport de vitesses, R, est effectuée. La reconnaissance se base sur des paramètres comprenant une estimation du rapport engagé de la boîte de vitesses et une information d'embrayage confirmée. L'information d'embrayage issue du capteur binaire d'embrayage est considérée comme information d'embrayage confirmée lorsque,
- l'état débrayé est indiqué par le signal obtenu du capteur, ou
- suite à la détection d'une transition du signal obtenu du capteur de l'état débrayé à l'état embrayé,
   ∘ l'état embrayé persiste après l'écoulement d'une période de temporisation d'une durée Tₘₐₓ, ou
   ∘ le signal d'estimation du rapport indique l'estimation d'un rapport engagé non-nul avant l'écoulement d'une période de temporisation d'une durée Tₘₐₓ.

Le procédé reconnait le rapport de vitesses nul reconnu lorsque l'information d'embrayage confirmée correspond à l'état débrayé. Il reconnait le rapport de vitesses indiqué par le signal d'estimation du rapport lorsque l'information d'embrayage confirmée correspond à l'état embrayé. Cet état peut être le rapport nul, si il est indiqué par le signal d'estimation du rapport à la fin de la période de temporisation, ou un rapport non-nul.

La figure 3 montre l'évolution temporelle 302, 304, 306 du signal 2 issu du capteur binaire d'embrayage, du signal de rapport estimé 4 selon la méthode d'estimation connue, et du signal 6 de l'information d'embrayage confirmée. Dans ce cas, dès que l'information embrayage est disponible au temps t1, une estimation du rapport engagé est disponible, puisqu'elle est devenue disponible à l'instant antérieur t2. L'information d'embrayage confirmée 6 est égale à l'information portée par le signal 2, il n'y a pas de temporisation du bit embrayage. Dès cet instant, le rapport estimé sera reconnu et mis à disposition des organes de calcul du véhicule.

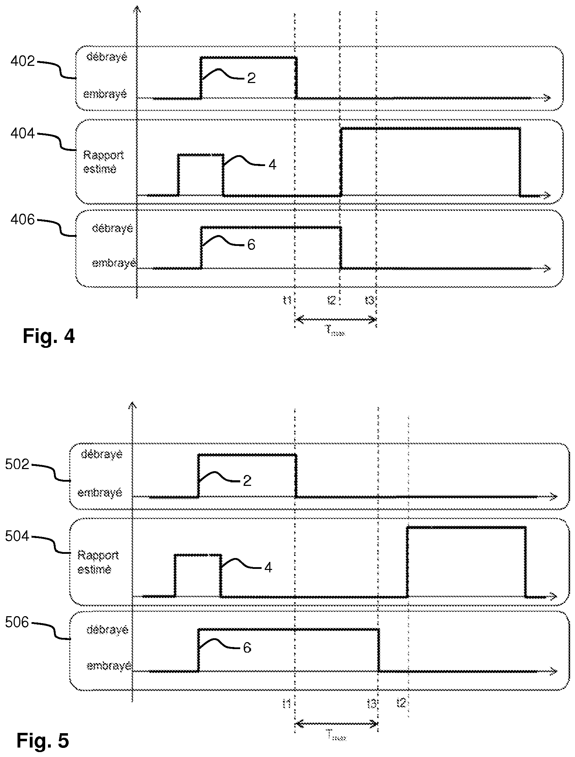

La figure 4 montre l'évolution temporelle 402, 404, 406 du signal 2 issu du capteur binaire d'embrayage, du signal de rapport estimé 4 selon la méthode d'estimation connue, et du signal 6 de l'information d'embrayage confirmée. Dans ce cas, le signal d'embrayage confirmé 6 est maintenu à l'état débrayé après la détection au temps t1 d'une transition à l'état embrayé du signal 2. Aucun rapport estimé n'est disponible au temps t1, ce qui déclenche l'écoulement d'une période de temporisation d'une durée maximale Tₘₐₓ. Tant que le rapport estimé 4 reste nul, et que la fourchette de temps Tₘₐₓ n'est pas terminée, le signal d'embrayage confirmé 6 est maintenu à l'état débrayé. Le bit embrayage est confirmé (retombe à 0) dès que l'estimation du rapport intervient à l'instant t2 (t2 < t1+ Tₘₐₓ) qui marque la détection de l'état embrayé. Dès cet instant, le rapport estimé sera reconnu et mis à disposition des organes de calcul du véhicule.

La figure 5 montre l'évolution temporelle 502, 504, 506 du signal 2 issu du capteur binaire d'embrayage, du signal de rapport estimé 4 selon la méthode d'estimation connue, et du signal 6 de l'information d'embrayage confirmée. Dans ce cas, le signal d'embrayage confirmé 6 est maintenu à l'état débrayé après la détection au temps t1 d'une transition à l'état embrayé du signal 2. Aucun rapport estimé n'est disponible au temps t1, ce qui déclenche l'écoulement d'une période de temporisation d'une durée maximale Tₘₐₓ. Tant que le rapport estimé 4 reste nul, et que la fourchette de temps Tₘₐₓ n'est pas terminée, le signal d'embrayage confirmé 6 est maintenu à l'état débrayé. Le bit embrayage est confirmé (retombe à 0) à l'instant t3 qui marque la fin de la période de temporisation. Dès cet instant, le rapport estimé nul sera reconnu et mis à disposition des organes de calcul du véhicule. Cette situation permet la prise en compte du cas ou le conducteur embrayerait avec le levier de vitesses en position neutre.

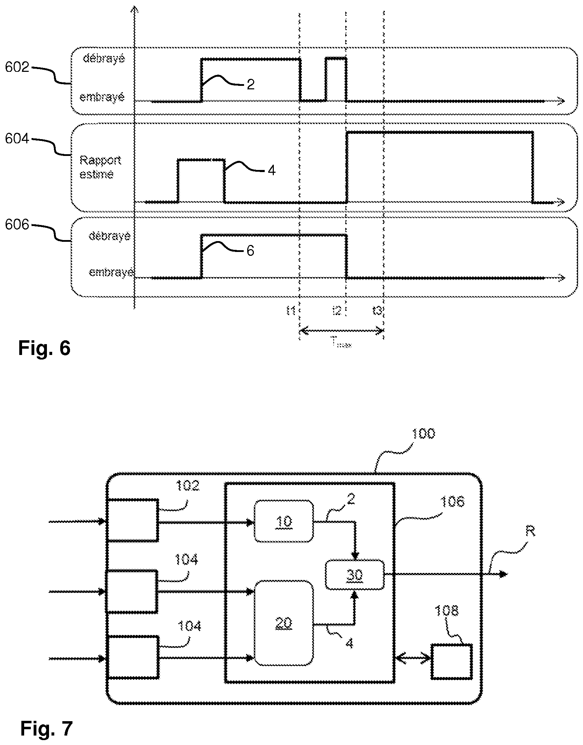

La figure 6 montre l'évolution temporelle 602, 604, 606 du signal 2 issu du capteur binaire d'embrayage, du signal de rapport estimé 4 selon la méthode d'estimation connue, et du signal 6 de l'information d'embrayage confirmée. Dans ce cas, le bit embrayage qui intervient au temps t1 n'est pas pris en compte et reste donc non confirmé. On est passé furtivement dans l'état d'attente de rapport estimé, puis on repasse en attente du bit d'embrayage. Cette transition est invisible sur le signal 6 d'embrayage confirmé, qui est une version filtré du signal 2.

Le procédé peut être implémenté par un programme d'ordinateur à base de la description fournie et des figures 1 à 6. L'implémentation en soi sera à la portée de l'homme de l'art ayant des connaissances générales en programmation informatique. Un programme d'ordinateur mettant en oeuvre le procédé selon l'invention contient des instructions lisibles et exécutables par un ordinateur, qui, lorsqu'elles sont chargées dans la mémoire de l'ordinateur et interprétées par les moyens processeurs de l'ordinateur, amènent ce dernier à mettre en oeuvre le procédé selon l'invention.

La figure 7 montre une illustration schématique d'un dispositif pour la mise en oeuvre du procédé décrit. En entrée, le dispositif 100 obtient un signal binaire 2 décrivant l'état de l'embrayage. Ce signal est mis à disposition des moyens processeurs 106 du dispositif à l'aide de moyens d'obtention 102, tels que par exemple un capteur binaire d'embrayage. D'autres moyens d'obtention 104, par exemple des capteurs connus en soi dans l'art, mettent des paramètres tels que le régime moteur et la vitesse instantanée du véhicule à disposition des moyens processeurs 106. Toutes ces grandeurs sont de manière connue accessibles par les moyens de calculs d'un véhicule automobile. Les moyens processeurs 106 sont configurés, par exemple par des instructions contenues dans l'élément mémoire 108, pour mettre en oeuvre les étapes 10, 20 et 30 du procédé selon l'invention. Lors de l'étape 10, la mise à disposition du signal d'embrayage 2 intervient. Lors de l'étape 20, l'estimation du rapport de vitesses engagé 4 a lieu sur base des grandeurs mises à disposition par les capteurs 104. Lors de l'étape 30, l'information d'embrayage confirmée est calculée selon le procédé décrit, y compris la stratégie de temporisation, et un rapport de vitesses R est reconnu. Le rapport de vitesses R figure en sortie du dispositif. Il est mis à disposition des organes de contrôle du véhicule, et notamment de la stratégie d'interprétation de la volonté du conducteur connue en soi, qui en est rendue plus fiable et plus robuste.

## Revendications

1. Procédé de reconnaissance d'un rapport de vitesses R engagé de la boîte de vitesses manuelle d'un véhicule automobile équipé d'un moteur thermique et d'un capteur d'embrayage binaire, le procédé comprenant les étapes suivantes :
- mise à disposition d'un signal binaire (2) indicatif de l'état embrayé/débrayé de l'embrayage du véhicule (10);
- mise à disposition d'un second signal (4) indicatif d'une estimation du rapport engagé de la boîte de vitesses (20);
- reconnaissance d'un rapport de vitesses, R, à base de paramètres comprenant une estimation du rapport engagé de la boîte de vitesses et une information d'embrayage confirmée (6), **caractérisé en ce qu'**une information d'embrayage en état débrayé est confirmée lorsque,
- l'état débrayé est indiqué par le signal binaire (2), et une information d'embrayage en état embrayé est confirmé lorsque,
- suite à la détection d'une transition du signal binaire (2) de l'état débrayé à l'état embrayé,
∘ l'état embrayé persiste après l'écoulement d'une période de temporisation d'une durée Tₘₐₓ, ou
∘ le second signal (4) indique l'estimation d'un rapport engagé non-nul avant l'écoulement d'une période de temporisation d'une durée Tₘₐₓ.

2. Procédé selon la revendication 1, **caractérisé en ce que** le rapport de vitesses nul est reconnu lorsque l'information d'embrayage confirmée (6) correspond à l'état débrayé.

3. Procédé selon une quelconque des revendications 1 ou 2, **caractérisé en ce que** le rapport de vitesses indiqué par le second signal (4) est reconnu lorsque l'information d'embrayage confirmée (6) correspond à l'état embrayé.

4. Procédé selon une quelconque des revendications 1 à 3, **caractérisé en ce que** le second signal (4) indicatif d'une estimation du rapport engagé de la boîte de vitesses est calculé par des moyens d'estimation à base de paramètres comprenant le régime moteur et/ou la vitesse du véhicule.

5. Procédé selon une quelconque des revendications 1 à 4, **caractérisé en ce que** la durée Tₘₐₓ de la période de temporisation est supérieure au temps nécessaire à la mise à disposition d'une estimation du rapport engagé de la boîte de vitesses.

6. Procédé selon une quelconque des revendications 1 à 4, **caractérisé en ce que** la durée Tₘₐₓ est supérieure ou égale à 100 ms.

7. Procédé d'interprétation de la volonté du conducteur exprimée par un taux d'appui sur la pédale d'accélérateur d'un véhicule automobile équipé d'une boîte de vitesses manuelle, d'un moteur thermique et d'un capteur d'embrayage binaire, le procédé prenant en compte un rapport de vitesses engagé reconnu, R, **caractérisé en ce que** le rapport de vitesses engagé est reconnu par le procédé selon une quelconque des revendications 1 à 6.

8. Dispositif (100) pour la mise en oeuvre du procédé selon une quelconque des revendications 1 à 6, le dispositif comprenant des moyens d'obtention (102) d'un signal binaire (2) indicatif de l'état embrayé/débrayé d'un véhicule automobile, des moyens d'obtention (104) de paramètres comprenant le régime moteur du véhicule, un élément mémoire (108) et des moyens de calculs (106),
**caractérisé en ce que** les moyens de calculs sont configurés de façon à
- calculer une estimation d'un rapport de vitesses engagé (4) en utilisant les paramètres comprenant le régime moteur du véhicule ;
- reconnaitre un rapport de vitesses, R, sur base d'une estimation du rapport engagé (4) et d'une information d'embrayage confirmée (6), l'information d'embrayage étant confirmée par les moyens de calculs lorsque, suite à la détection d'une transition du signal binaire (2) de l'état débrayé à l'état embrayé,
∘ l'état embrayé persiste après l'écoulement d'une période de temporisation d'une durée Tₘₐₓ, ou
∘ l'estimation d'un rapport engagé indique un rapport non-nul avant l'écoulement d'une période de temporisation d'une durée Tₘₐₓ.

9. Programme d'ordinateur comprenant des instructions lisibles et exécutables par un ordinateur, **caractérisé en ce que** les instructions amènent un ordinateur qui les exécute à mettre en oeuvre le procédé selon une quelconque des revendications 1 à 6.

10. Véhicule automobile équipé d'une boîte de vitesses manuelle, d'un moteur thermique et d'un capteur d'embrayage binaire, **caractérisé en ce que** le véhicule est équipé d'un dispositif selon la revendication 8.

## Patentansprüche

1. Verfahren zum Erkennen eines eingelegten Gangs R des manuellen Schaltgetriebes eines Kraftfahrzeugs, das mit einer Brennkraftmaschine und einem binären Kupplungssensor ausgestattet ist, wobei das Verfahren die folgenden Schritte umfasst:
- Bereitstellen eines binären Signals (2), das auf den eingelegten/ausgerückten Zustand der Kupplung des Fahrzeugs (10) hinweist;
- Bereitstellen eines zweiten Signals (4), das auf eine Schätzung des eingelegten Gangs des Schaltgetriebes (20) hinweist;
- Erkennen eines Gangs R auf der Basis von Parametern, die eine Schätzung des eingelegten Gangs des Schaltgetriebes und eine bestätigte Kupplungsinformation (6) umfassen,
**dadurch gekennzeichnet, dass** eine Kupplungsinformation im ausgerückten Zustand bestätigt wird, wenn
- der ausgerückte Zustand von dem binären Signal (2) angegeben wird, und eine Information für Kupplung im eingerückten Zustand bestätigt wird,
- im Anschluss an das Erfassen eines Übergangs des binären Signals (2) des ausgerückten Zustands auf den eingerückten Zustand,
∘ der eingerückte Zustand nach dem Verstreichen einer Verzögerungsperiode mit einer Dauer von Tₘₐₓ fortdauert, oder
∘ das zweite Signal (4) die Schätzung eines eingelegten Gangs nicht gleich null vor dem Ablaufen einer Verzögerungsperiode mit einer Dauer Tₘₐₓ angibt.

2. Verfahren nach Anspruch 1, **dadurch gekennzeichnet, dass** der Gang gleich null erkannt wird, wenn die bestätigte Kupplungsinformation (6) dem ausgerückten Zustand entspricht.

3. Verfahren nach einem der Ansprüche 1 oder 2, **dadurch gekennzeichnet, dass** der von dem zweiten Signal (4) angegebene Gang erkannt wird, wenn die bestätigte Kupplungsinformation (6) dem eingerückten Zustand entspricht.

4. Verfahren nach einem der Ansprüche 1 bis 3, **dadurch gekennzeichnet, dass** das zweite Signal (4), das auf eine Schätzung des eingelegten Gangs des Schaltgetriebes hinweist, von Schätzungsmitteln auf der Basis von Parametern berechnet wird, die die Motordrehzahl und/oder die Geschwindigkeit des Fahrzeugs umfassen.

5. Verfahren nach einem der Ansprüche 1 bis 4, **dadurch gekennzeichnet, dass** die Dauer Tₘₐₓ der Verzögerungsperiode größer ist als die Zeit, die für die Bereitstellung einer Schätzung des eingelegten Gangs des Schaltgetriebes erforderlich ist.

6. Verfahren nach einem der Ansprüche 1 bis 4, **dadurch gekennzeichnet, dass** die Dauer Tₘₐₓ größer oder gleich 100 ms ist.

7. Verfahren zur Auslegung des Wunschs des Fahrers, der durch eine Druckrate auf das Gaspedal eines Kraftfahrzeugs, das mit einem manuellen Schaltgetriebe, einer Brennkraftmaschine und einem binären Kupplungssensor ausgestattet ist, ausgedrückt wird, wobei das Verfahren einen erkannten eingelegten Gang R berücksichtigt, **dadurch gekennzeichnet, dass** der eingelegte Gang von dem Verfahren nach einem der Ansprüche 1 bis 6 erkannt wird.

8. Vorrichtung (100) zur Umsetzung des Verfahrens nach einem der Ansprüche 1 bis 6, wobei die Vorrichtung Mittel zum Erzielen (102) eines binären Signals (2), das auf den gekuppelten/ausgekuppelten Zustand eines Kraftfahrzeugs hinweist, Mittel zum Erzielen (104) von Parametern, die Motordrehzahl des Fahrzeugs, ein Speicherelement (108) und Rechenmittel (106) umfassen, **dadurch gekennzeichnet, dass** die Rechenmittel konfiguriert sind, um
- eine Schätzung eines eingelegten Gangs (4) zu berechnen, indem die Parameter verwendet werden, die die Motordrehzahl des Fahrzeugs umfassen;
- einen Gang R auf der Basis einer Schätzung des eingelegten Gangs (4) und einer bestätigten Kupplungsinformation (6) zu erkennen, wobei die Kupplungsinformation durch die Rechenmittel im Anschluss an das Erfassen eines Übergangs des binären Signals (2) von dem ausgekuppelten Zustand auf den gekuppelten Zustand bestätigt wird,
∘ der gekuppelte Zustand nach dem Verstreichen einer Verzögerungsperiode mit einer Dauer Tₘₐₓ fortdauert, oder
∘ die Schätzung eines eingelegten Gangs einen Gang nicht gleich null vor dem Verstreichen einer Verzögerungsperiode mit einer Dauer Tmax angibt.

9. Computerprogramm, das von einem Rechner lesbare und ausführbare Anweisungen umfasst, **dadurch gekennzeichnet, dass** die Anweisungen einen Rechner, der sie ausführt, veranlassen, das Verfahren nach einem der Ansprüche 1 bis 6 umzusetzen.

10. Kraftfahrzeug, das mit einem manuellen Schaltgetriebe, einer Brennkraftmaschine und einem binären Kupplungssensor ausgestattet ist, **dadurch gekennzeichnet, dass** das Fahrzeug mit einer Vorrichtung nach Anspruch 8 ausgestattet ist.

## Claims

1. A method for recognizing an engaged gear ratio R of the manual gearbox of a motor vehicle equipped with a heat engine and a binary clutch engagement sensor, the method including the following steps:
- providing a binary signal (2) indicative of the engaged/disengaged state of the clutch of the vehicle (10);
- providing a second signal (4) indicative of an estimation of the engaged ratio of the gearbox (20) ;
- recognition of a gear ratio R, based on parameters including an estimation of the engaged ratio of the gearbox and confirmed clutch engagement information (6),
**characterized in that** clutch engagement information in disengaged state is confirmed when
- the disengaged state is indicated by the binary signal (2) and clutch engagement information in engaged state is confirmed when,
- following the detection of a transition of the binary signal (2) from the disengaged state to the engaged state
∘ the engaged state persists after a delay period of a duration Tₘₐₓ has elapsed, or
∘ the second signal (4) indicates the estimation of a non-zero engaged ratio before a delay period of a duration Tₘₐₓ has elapsed.

2. The method according to Claim 1, **characterized in that** the zero gear ratio is recognized when the confirmed clutch engagement information (6) corresponds to the disengaged state.

3. The method according to any one of Claims 1 or 2, **characterized in that** the gear ratio indicated by the second signal (4) is recognized when the confirmed clutch engagement information (6) corresponds to the engaged state.

4. The method according to any one of Claims 1 to 3, **characterized in that** the second signal (4) indicative of an estimation of the engaged ratio of the gearbox is calculated by estimation means based on parameters including the engine speed and/or the speed of the vehicle.

5. The method according to any one of Claims 1 to 4, **characterized in that** the duration Tₘₐₓ of the delay period is greater than the time necessary for providing an estimation of the engaged ratio of the gearbox.

6. The method according to any one of Claims 1 to 4, **characterized in that** the duration Tₘₐₓ is greater than or equal to 100 ms.

7. A method for interpretation of the intention of the driver expressed by a rate of depression on the accelerator pedal of a motor vehicle equipped with a manual gearbox, with a heat engine and with a binary clutch engagement sensor, the method taking into account a recognized engaged gear ratio, R, **characterized in that** the engaged gear ratio is recognized by the method according to any one of Claims 1 to 6.

8. A device (100) for implementing the method according to any one of Claims 1 to 6, the device including means (102) for obtaining a binary signal (2) indicative of the engaged/disengaged state of a motor vehicle, means (104) for obtaining parameters including the engine speed of the vehicle, a memory element (108) and calculation means (106),
**characterized in that** the calculation means are configured so as to
- calculate an estimation of an engaged gear ratio (4) using the parameters including the engine speed of the vehicle;
- recognize a gear ratio, R, on the basis of an estimation of the engaged ratio (4) and a confirmed clutch engagement information (6), the clutch engagement information being confirmed by the calculation means when, following the detection of a transition of the binary signal (2) from the disengaged state to the engaged state,
∘ the engaged state persists after a delay period of a duration Tₘₐₓ has elapsed, or
∘ the estimation of an engaged ratio indicates a non-zero ratio before a delay period of a duration Tₘₐₓ has elapsed.

9. A computer program including instructions which are readable and executable by a computer, **characterized in that** the instructions cause a computer which executes them to implement the method according to any one of Claims 1 to 6.

10. A motor vehicle equipped with a manual gearbox, with a heat engine and with a binary clutch engagement sensor, **characterized in that** the vehicle is equipped with a device according to Claim 8.
